# EUROPÄISCHE PATENTSCHRIFT

(11) **EP 1 037 834 B1**
(45) Veröffentlichungstag und Bekanntmachung des Hinweises auf die Patenterteilung: **26.06.2002**
(21) Anmeldenummer: 98966540.1
(22) Anmeldetag: 08.12.1998
(51) Int. Cl.: B65G 47/38

(54) **VERTEILFÖRDERER ZUM ÜBERGEBEN VON STÜCKGUT**
SEPARATING CONVEYOR FOR THE TRANSFER OF UNIT LOADS
CONVOYEUR DISTRIBUTEUR POUR LE TRANSFERT DE CHARGES ISOLEES

(30) Priorität: 09.12.1997 DE 19756303
(43) Veröffentlichungstag der Anmeldung: 27.09.2000
(73) Patentinhaber: Siemens AG, 80333 München (DE)
(72) Erfinder: AYEN, Erwin, D-64832 Babenhausen (DE); GREIN, Wolfgang, D-63225 Langen (DE); DROSTE, Heinrich, D-74889 Sinsheim (DE)
(86) Internationale Anmeldenummer: DE9803669
(87) Internationale Veröffentlichungsnummer: WO9929601

(56) Entgegenhaltungen:
- WO-A-98/25842
- DE-A- 2 151 439
- DE-A- 4 220 117
- DE-A- 19 755 877
- US-A- 5 188 216

## Beschreibung

Die Erfindung betrifft einen Verteilförderer zum Übergeben von Stückgut, insbesondere für Fluggepäckstücke, gemäß dem Oberbegriff des Anspruchs 1.

Aus der deutschen Patentschrift DE 42 25 491 C1 ist eine Vorrichtung zum Entleeren von Behältern bekannt, die im Verlauf einer Förderbahn angeordnet ist. Die Behälter dienen vorzugsweise für den Transport von einzelnen Fluggepäckstücken. Die Vorrichtung zum Entleeren besteht im wesentlichen aus mehreren in Förderrichtung hintereinander und mit Abstand zueinander ortsfest angeordneten Kipparmen, die quer zur Förderrichtung sich erstrecken und jeweils in ihrer Mitte um eine in Förderrichtung verlaufende Achse nach beiden Seiten schwenkbar gelagert sind. Des weiteren sind im Bereich der Entleervorrichtung Tragrollen nach Art einer Rollenbahn vorgesehen, die in einer einzigen Reihe in Förderrichtung gesehen hintereinander angeordnet und scheibenförmig sind. Die Ausbildung der Tragrollen und der Unterseite der Behälter mit einem zentralen und in Förderrichtung durchgehendne Schlitz ist so gewählt, daß die von den Tragrollen abgestützten Behälter nach beiden Seiten etwa bis zu 45° auf den Tragrollen kippbar sind. Die Kippbewegung der Behälter, um die von diesen transportierten Gepäckstücke auf seitlich an die Entleervorrichtung angrenzende Abzweigförderer abrutschen zu lassen, erfolgt über die doppelarmigen Kipparme. Hierzu sind an den gegenüberliegenden Enden der Kipparme Führungen in Form von um horizontale Achsen drehbaren Führungsrollen vorgesehen, die in entsprechend an dem Behälter angeordnete Führungsstegen eingreifen, um die Schwenkbewegung der Kipparme auf die Behälter zu übertragen. Die in Förderrichtung hintereinander angeordneten Kipparme weisen einen Abstand zueinander auf, der geringer ist als die Länge der Behälter, damit die Behälter während des Kippvorganges an den in Förderrichtung darauffolgenden Kipparm, der sich in der gleichen Kippstellung befindet, übergeben werden können.

Diese Entleervorrichtung ist für eine Vielzahl von Einsatzfällen geeignet und zeichnet sich durch die ortsfeste Anordnung der Kipparme aus. Die Durchsatzleistung der Entleervorrichtung wird jedoch dadurch begrenzt, daß zwischen den einzelnen zu entleerenden Behältern eine ausreichende Lücke vorhanden sein muß, damit sich die Kipparme aus der verschwenkten Stellung zur Aufnahme des folgenden Behälters wieder in die Horizontallage ausrichten können.

Desweiteren ist aus der deutschen Patentschrift DE 21 51 439 C2 bereits eine im Verlauf einer Förderbahn angeordnete Kippvorrichtung für Stückgut bekannt, die im wesentlichen aus in Förderrichtung verfahrbaren Tragschalen bestehen, die zum Abkippen des Stückguts um eine in Förderrichtung verlaufende Achse zur rechten oder linken Seite schwenkbar sind. Das Stückgut kann somit gezielt auf einen angrenzenden Abzweigförderer übergeben werden. Die Tragschalen sind jeweils über einen Kipparm auf einzelnen Fahrwerken befestigt, die in Förderrichtung hintereinander angeordnet und miteinander verbunden sind. Die Fahrwerke bilden somit eine endlose Kette, die jeweils an den Übergängen zu der angrenzenden Förderbahn um ein Umlenkrad geführt ist und somit endlos umlaufend ausgebildet ist. Für den Kippvorgang wird das Stückgut von der angrenzenden Förderbahn auf die Tragschale des Obertrums der Kette übergeben und entweder in Richtung der Abzweigförderbahn abgekippt oder an die sich an die Kippvorrichtung anschließende Förderbahn für einen Weitertransport übergeben. Die Kippbewegung der Tragschale erfolgt über einen an den Kipparm angreifenden Hebelarm, der sich im wesentlichen vertikal nach unten erstreckt und an seinem dem Kipparm abgewandten Ende eine Führungsrolle aufweist. Die Führungsrolle wird in einer entlang der umlaufenden und stadionförmig ausgebildeten Bewegungsbahn der Fahrwerke der Tragschalen verlaufenden Führungsschiene geführt. Hierdurch ist die Tragschale in ihrer Horizontalstellung verriegelt. Für den Kippvorgang sind im Verlauf der Führungsschiene Weichen angeordnet, um je nach gewünschter Kipprichtung zu der rechten oder linken Seite die Führungsrolle in eine oberhalb oder unterhalb der Führungsschiene angeordnete Kippschiene umzuleiten. Durch die Umleitung der Führungsrolle wird in entsprechender Weise der Hebelarm nach unten gezogen bzw. nach oben geschoben, wodurch die Tragschale nach rechts oder links verkippt wird. Die Umschaltung der Weichenelemente erfolgt über einen doppelt wirkenden Pneumatikzylinder, dessen horizontal gerichtete Bewegung über zwei jeweils mit einer Kulissenführung zusammenwirkenden Rollen in eine Verschwenkung der Weichen in Vertikalrichtung umgesetzt wird.

Der vorliegenden Erfindung liegt die Aufgabe zugrunde, einen Verteilförderer für Stückgut, insbesondere Fluggepäckstücke, zu schaffen, der einen optimierten Antrieb für die Bewegung der Weichenschienen zur Einleitung der Kippbewegung der Kipparme aufweist.

Diese Aufgabe wird bei einer Kippvorrichtung zum Entleeren von Behältern für Stückgut durch die im Anspruch 1 aufgeführten Merkmale gelöst. Vorteilhafte Ausgestaltungen der Erfindung sind in den Unteransprüchen 2 bis 10 angegeben.

Zur Durchführung der Kippbewegung der Behälter ist an jedem Kipparm außerhalb seiner Achse gelenkig ein Hebelarm gelagert, der im wesentlichen vertikal ausgerichtet ist und an seinem dem Kipparm abgewandten Ende eine Führungsrolle aufweist. Diese Führungsrolle greift für ein Halten des Kipparms in seiner horizontalen Transportstellung in eine parallel zur stadionförmigen Fahrschiene verlaufende Führungsschiene ein. Zum Verschwenken der Kipparme sind im Verlauf der Führungsschienen Weichenschienen vorgesehen, die um ein Weichengelenk mit einer quer zur Förderrichtung und horizontal ausgerichteten Achse schwenkbar sind und über die die Führungsrollen von der Führungsschiene in eine vertikal zur Führungsschiene versetzt angeordnete Kippschiene umleitbar sind. Durch die hierdurch auf den Hebelarm einwirkende Zug- bzw. Druckkraft in Vertikalrichtung wird der Kipparm und somit der darauf befestigte Behälter entweder zu der einen oder anderen Seite der Kippvorrichtung verschwenkt. Diese Ausbildung der Kippmechanik erweist sich als konstruktiv sehr einfach, da diese im wesentlichen auf mechanischen Bauteilen basiert. Auch ist die Störanfälligkeit einer derartigen mechanischen Lösung relativ gering.

Als vorteilhafte Ausbildung der Weichenelemente hat sich die Anordnung einer um ein Weichenelement schwenkbaren Weichenschiene im Verlauf der Führungsschiene bewährt. Die Weichenschiene weist hierbei eine Länge auf, die in etwa der Länge eines Behälters entspricht. Hierdurch ist eine relativ sanfte Kippbewegung der Kipparme und somit des Kippbehälters möglich. Die Weichenschiene ist aus ihrer horizontalen Ruhestellung in ihre Betriebsstellung über einen Antrieb verschwenkbar.

In der Betriebsstellung verbindet die Weichenschiene die Führungsschiene mit einer dieser zugeordneten Kippschiene.

Als Antrieb für die Verschwenkbewegung der Weichenschiene hat sich die Verwendung eines ebenen Kurvengetriebes mit Schub- und Drehgelenken nach Art eines Malteserkreuzes als vorteilhaft erwiesen, da hierdurch gewährleistet ist, daß in der Ruhestellung und auch der Betriebsstellung der Kippschiene der vorzugsweise als Elektromotor mit vorgeschaltetem Getriebe ausgebildete Antrieb nicht auf Drehung beansprucht wird und die Stützkräfte der Weichenschiene direkt in die Abtriebswelle des Getriebes eingeleitet werden. Das Kurvengetriebe erweist sich somit als selbsthemmend.

Dieses Kurvengetriebe ist durch eine auf der Abtriebswelle angeordnete Stiftscheibe verwirklicht, die im wesentlichen aus einem versetzt zur Abtriebswelle angeordneten Stift besteht, der in einen Schlitz einer koaxial zur Stiftscheibe drehbaren Schlitzscheibe eingreift. An dem dem Schlitz gegenüberliegenden Ende der Schlitzscheibe ist eine Verbindungsstange gelenkig gelagert, die mit der Weichenschiene verbunden ist und die Aufgabe hat, die Drehbewegung der Schlitzscheibe in eine Hub- oder Senkbewegung der Weichenschiene umzusetzen. Damit die zuvor beschriebene Selbsthemmung des Kurvengetriebes möglich ist, sind an der Stiftscheibe und an der Schlitzscheibe bogenförmige Anlageflächen vorgesehen, die in der Betriebs- und Ruhestellung der Stift- und Schlitzscheibe aneinanderliegen und somit den Stift entlasten. Zwischen den beiden Stellungen ist die Stiftscheibe um 90° schwenkbar und in beiden Schwenkstellungen der Stiftscheibe ist jeweils der Schlitz mit seiner Längserstreckung tangential zur Welle der Stiftscheibe und mit Abstand zu dieser Welle angeordnet.

Darüberhinaus erweist es sich als vorteilhaft einen doppelten Satz von Führungsschienen und Kippschienen vorzusehen, die in Förderrichtung gesehen sich auf der rechten und linken Seite unterhalb der Fahrschienen befinden. Hierdurch ist es möglich, am Beginn der Fahrschienen der Kippvorrichtung jeweils ein Weichenelement auf der linken Seite und ein weiteres Weichenelement in Fahrtrichtung kurz darauf folgend auf der rechten Seite vorzusehen. Der Abstand der Weichenelemente entspricht dem Abstand der aufeinanderfolgenden Kipparme, die jeweils gemeinsam einen Behälter tragen, wodurch deren gleichzeitige Verschwenkung möglich ist. Durch die seitlich versetzte Anordnung der Weichenelemente ist es möglich, die Geschwindigkeit der Fahrwerke zu erhöhen, da die Abstände zwischen den einzelnen Führungsrollen auf einer Seite der Führungsund Kippschienen verdoppelt ist und somit ausreichend Zeit verbleibt auch bei höheren Fördergeschwindigkeiten, die Weichenschienen vor Eintreffen der nächsten Führungsrolle in die gewünschte Position zu schalten. Hierfür sind die Kipparme auf den Fahrwerken jeweils um 180° verdreht angeordnet und in Förderrichtung gesehen sind die Führungsrollen jeweils abwechselnd in die rechten oder linken Schienen eingreifend vorgesehen.

Durch die in Förderrichtung mitfahrende Ausbildung der Kipparme wird erreicht, daß mindestens zwei Kipparme einem Behälter während des gesamten Kippvorganges zugeordnet werden und somit auch die Rückstellbewegung des Kipparms in die horizontale Lage zusammen mit dem Behälter stattfindet, wodurch vermieden wird, zusätzliche Zeit für die Rückstellung der Kipparme vorsehen zu müssen. Hierdurch wird die Durchsatzleistung bzw. die Länge der Kippvorrichtung optimiert. Mit einer derartigen Kippvorrichtung sind Durchsatzleistungen von 2500 Behältern pro Stunde erreichbar.

Als besonders vorteilhafte Befestigungsart der Behälter auf den Kipparmen erweist sich die Anordnung von Permanentmagneten an den Enden der Kipparme sowie eines von der Magnetkraft haltbaren Materials, insbesondere Stahlblech, an der Unterseite des Behälterbodens, wenn der Behälter aus Kunststoff hergestellt ist. Die Verbindung der Permanentmagnete mit dem Behälter kann am Ende der Kippvorrichtung leicht durch die nach unten abkippende Bewegung der Kipparme gelöst werden und der Behälter sicher an die anschließende Förderbahn übergeben werden. Durch die in Förderrichtung gesehen am Anfang und Ende der Kippvorrichtung erfolgende Kippbewegung der Permanentmagnete um eine quer zur Förderrichtung gerichtete Achse in bzw. aus ihrer im wesentlichen horizontalen Lage an den Kipparmen, wird ein sanftes An- und Abkoppeln an und von dem Behälter erreicht. Desweiteren wird durch die scheibenförmige Ausbildung der Haltemittel, wobei eine Scheibenfläche dem anzukoppelnden Behälter zugewandt ist, und die zusätzliche leicht winkelbewegliche Lagerung der Haltemittel an den Kipparmen erreicht, daß ein möglichst vollflächiger Kontakt der Haltemittel mit der Unterseite des Behälters erreicht wird und somit die Behälter sicher auf den Kipparmen und auch während der Kippbewegung gehalten werden.

Auch erweist es sich als vorteilhaft die Fahrwerke mit Laufrollen zu versehen, die auf quer zur Förderrichtung gesehen stadionförmig verlaufenden Fahrschienen abrollen und das Zugmittel mit den daran angeordneten Fahrwerken über zwei im Bereich der Enden der Fahrschienen angeordnete Umlenkräder geführt ist.

Nachfolgend wird die Erfindung anhand eines Ausführungsbeispieles näher erläutert. Es zeigen:
- Fig. 1: eine Seitenansicht eines im Verlauf eines Gurtförderers angeordneten Verteilförderers zum Übergeben von in Behältern transportierten Fluggepäckstücken,
- Fig. 2: eine Schnittansicht von Fig. 1, entlang der Schnittlinie II - II,
- Fig. 3: eine Ausschnittvergrößerung von Fig. 2 aus dem Bereich des Kippantriebes, jedoch in Kippstellung des Kipparms,
- Fig. 4: eine Ausschnittsvergrößerung von Fig. 1 aus dem Bereich der Weichenelemente,
- Fig. 5: eine Ausschnittsvergrößerung von Fig. 4 aus dem Bereich eines Antriebs eines Weichenelements und
- Fig. 6: eine Draufsicht auf Fig. 4.

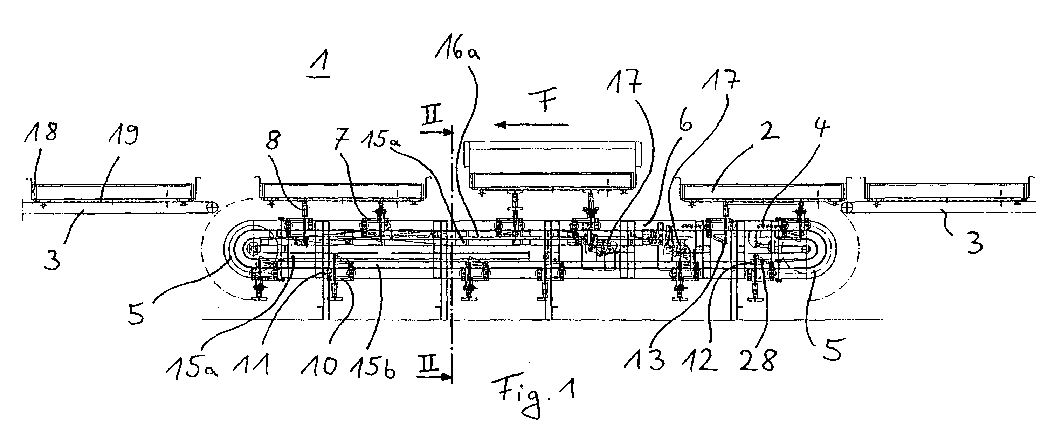

In Fig. 1 ist eine Seitenansicht einer erfindungsgemäßen Kippvorrichtung 1 für die Entleerung von Behältern 2, insbesondere Transportbehälter für Fluggepäckstücke, dargestellt. Die Kippvorrichtung 1 ist im Verlauf einer Förderbahn 3 angeordnet, die vorzugsweise als Gurtbandförderer ausgebildet ist, auf dem die Transportbehälter seitlich von je einem Gurtband abgetragen werden. Die Förderbahn 3 dient zum Zuund Abführen der Behälter 2 zu bzw. von der Kippvorrichtung 1. Die Kippvorrichtung 1 hat die Aufgabe, die Behälter 2 einseitig und quer zur Förderrichtung F seitlich zu verschwenken, um das von den Behältern 2 geförderte Transportgut auf nicht dargestellte Abzweigförderer, die vorzugsweise als Rutschen ausgebildet sind, abzugeben.

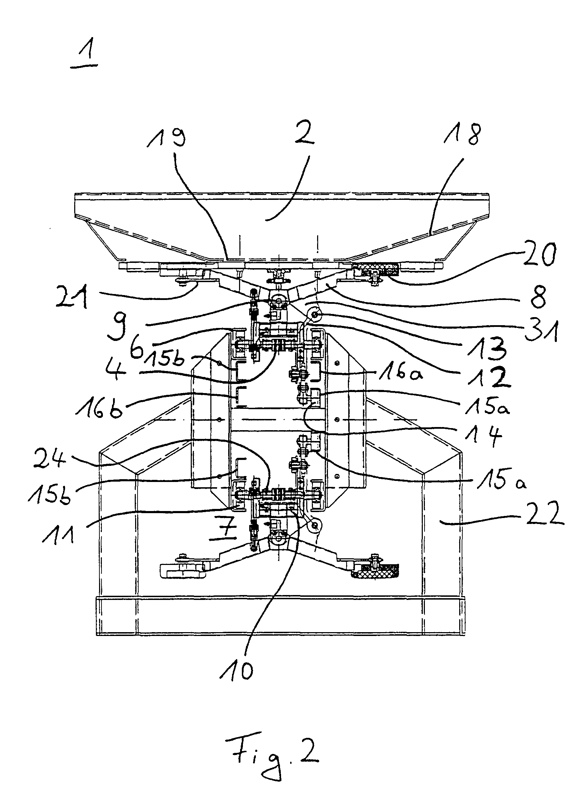

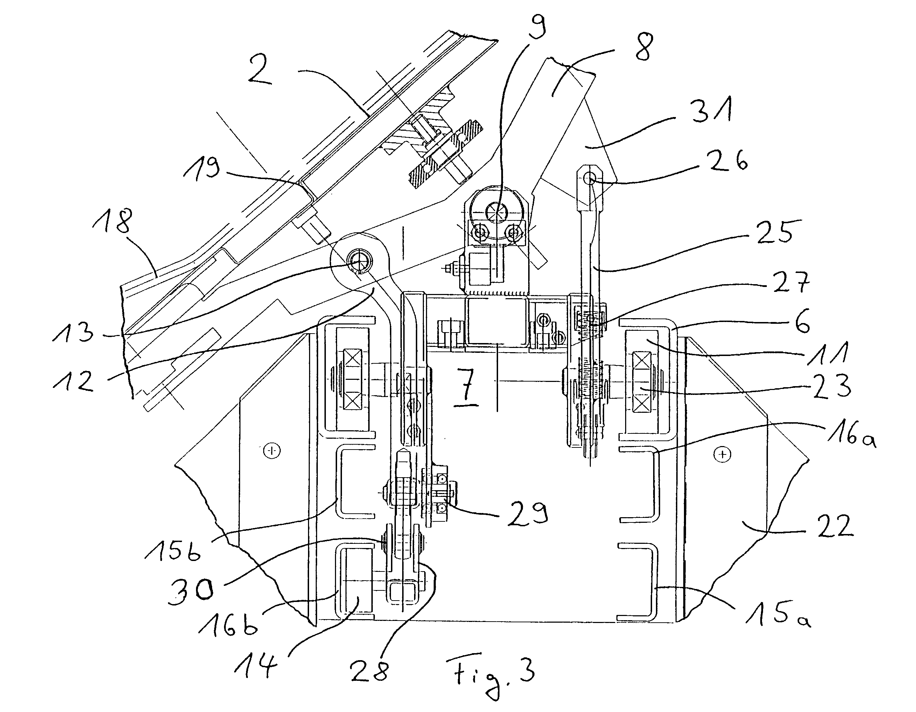

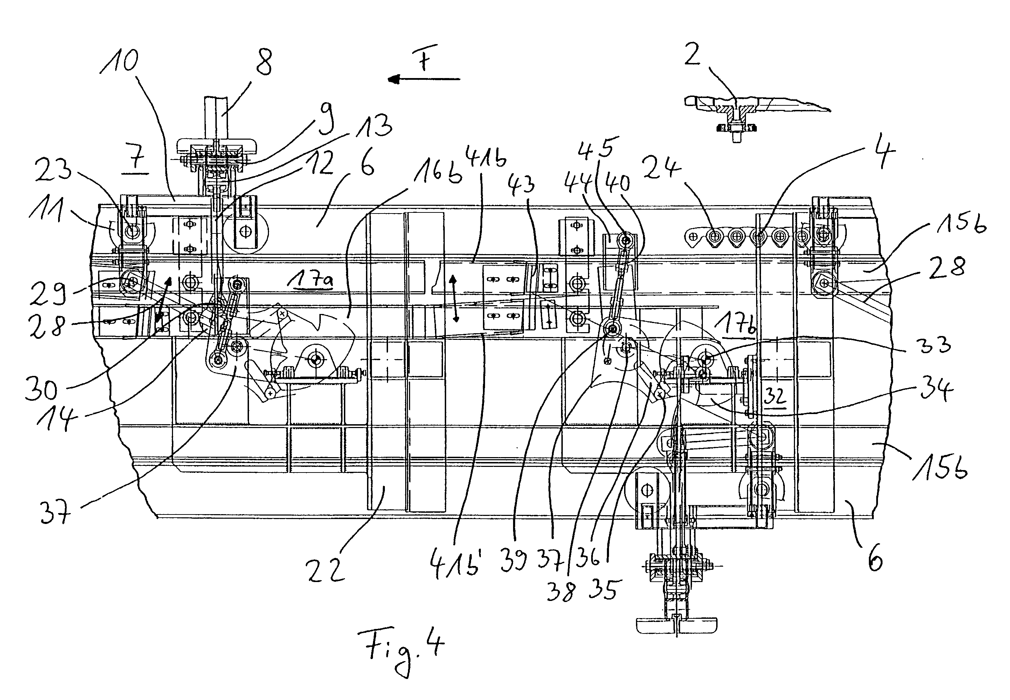

Die Kippvorrichtung 1 besteht im wesentlichen aus einem endlos umlaufenden Zugmittel 4, das am Anfang und am Ende der Kippvorrichtung 1 über Umlenkräder 5, die um horizontale und quer zur Förderrichtung F verlaufende Achsen drehbar gelagert sind, geführt ist. Das nur teilweise dargestellte Zugmittel 4 ist vorzugsweise als Kette ausgebildet und dementsprechend die Umlenkräder 5 als Zahnräder. Zwischen den Umlenkrädern 5 ist das Zugmittel 4 über sich in Förderrichtung F erstreckende und seitlich offene Fahrschienen 6 geführt (s. auch Fig. 3 und Fig. 4), deren Führungsflächen vorzugsweise aus Kunststoff hergestellt sind. An dem Zugmittel 4 sind über Bolzen Fahrwerke 7 befestigt, die somit im Bereich des Obertrums des Zugmittels 4 in Förderrichtung F antreibbar sind. Entlang des Zugmittels 4 sind eine Vielzahl von Fahrwerken 7 angeordnet, deren Abstand zueinander so gewählt ist, daß jeweils zwei in Förderrichtung F aufeinanderfolgende Fahrwerke 7 ein Paar bilden, die jeweils einen Behälter 2 tragen. Jedes Paar ist in Abhängigkeit von der Länge des Behälters 2 unter Einhaltung eines Mindestabstandes zu dem darauffolgenden Behälter 2 voneinander beabstandet. Für den Schwenkvorgang der Behälter 2 ist auf jedem Fahrwerk 7 ein Kipparm 8 befestigt, der um eine in Förderrichtung F sowie horizontal verlaufende Achse 9 (s. Fig 2 und 3) schwenkbar ist.

Das Fahrwerk 7 besteht im wesentlichen aus einem Rahmen 10, auf dem der Kipparm 8 über die Achse 9 gelagert ist. Diese Beschreibung bezieht sich auf ein Fahrwerk 7, das sich in Förderrichtung F im Bereich des Obertrums des Zugmittels 4 bewegt. Des weiteren weist das Fahrwerk 8 vier Laufrollen 11 auf, die in Förderrichtung F gesehen jeweils paarweise hintereinander und somit auch nebeneinander angeordnet sind (siehe auch Figuren 2 und 3). Die Laufrollen 11 rollen in Fahrschienen 6 ab, die entlang des Zugmittels 4 verlaufend an der Kippvorrichtung 1 angeordnet sind. Von der Seite her gesehen hat die Fahrschiene 6 eine stadionförmige Ausbildung, d. h. diese besteht aus zwei parallel gegenüberliegenden geraden Schienen, deren Enden über jeweils eine halbkreisförmige Schiene miteinander verbunden sind.

Die Kippbewegung der Kipparme 8 erfolgt über eine Koppelstange 12 der über eine in Fahrtrichtung F verlaufende Achse 13 (siehe Figuren 2 und 3) eines Gelenkopfes schwenkbar an dem Kipparm 8 gelagert ist und sich im wesentlichen vertikal nach unten erstreckt. An dem dem Kipparm 8 abgewandten Ende der Koppelstange 12 ist eine Führungsrolle 14 angeordnet, die in eine parallel zu der Fahrschiene 6 somit ebenfalls stadionförmig verlaufende Führungsschiene 15a, 15b eingreift. Um die Kipparme 8 aus ihrer horizontalen Transportstellung in ihre Kippstellung zu bewegen, sind parallel zu den Führungsschienen 15a, 15b und ober- bzw. unterhalb dieser verlaufende Kippschienen 16a, 16b vorgesehen. Die Führungsschienen 15a, 15b und die Kippschienen 16a, 16b sind über Weichenelemente 17a, 17b miteinander verbunden. Durch Umschaltung der Weichenelemente 17a, 17b ist somit eine Einleitung der Schwenkbewegung der Kipparme 8 möglich, da durch die Umleitung der Führungsrolle 14 von der Führungsschiene 15a, 15b auf die zugeordnete Kippschiene 16 der Koppelstange 12 entweder nach oben geschoben oder nach unten gezogen wird und somit der Kipparm 8 verschwenkt wird.

Die Fig. 2 zeigt eine vergrößerte Schnittansicht von Fig. 1 entlang der Schnittlinie II - II, der u. a. die Ausbildung der Behälter 2 zu entnehmen ist. Diese Behälter 2 eignen sich besonders, um das transportierte Fördergut in Form von Koffern, Rucksäcken oder Taschen durch Kippen um etwa 45° auszuschleusen. Unter wannenförmig ist hierbei zu verstehen, daß die Behälter 2 quer zur Förderrichtung F augerichtete Seitenwände 18 aufweisen, die nahezu senkrecht zum Boden 19 des Behälters 2 ausgerichtet sind, um das Fördergut während des Transportes der Behälter 2 auf den Förderbahnen 3 in Steigungs-, Gefälle- und Kurvenstrecken am Verlassen des Behälters 2 zu hindern. Im vorliegenden Ausführungsbeispiel sind die in Förderrichtung F ausgerichteten inneren Seitenwände 18 des Behälters 2 in etwa mit einem Winkel von 20° zu dem Boden 19 angeordnet. Diese schräge Ausbildung der Seitenwand 19 begünstigt beim Kippen des Behälters 2 ein Herausrutschen des Fördergutes auf die angrenzende Abzweigbahn.

Die Behälter 2 sind während der Transportbewegung in Förderrichtung F auf der Kippvorrichtung 1 über Haltemittel 20 mit dem Kipparm 8 verriegelt. Gleichzeitig ruht der Behälter 2 mit seinem Boden 19 auf dem Kipparm 8. Die Haltemittel 20 sind vorzugsweise als Permanentmagnete ausgebildet und dementsprechend der vorzugsweise aus Kunststoff hergestellte Behälter im Bereich der Außenseite seines Bodens 19 mit einem Blechprofil versehen, das darüber hinaus dem Schutz des aus Kunststoff hergestellten Behälters 2 dient.

Es ist auch möglich, die Haltemittel 20 als mechanische Verriegelung auszubilden und entsprechende Aussparungen an dem Behälter 2 vorzusehen oder Elektromagnete zu verwenden.

Desweiteren ist der Fig. 2 zu entnehmen, daß die Fahrschienen 6 für die Fahrwerke 7 aus zwei U-Profilen gebildet sind, die aufrechtstehend und mit ihren offenen Seiten einander zugewandt und seitlich mit ihrer Außenseite des Flansches an einem Tragrahmen 23 angeordnet sind. Jeweils auf dem unteren Steg der U-profilförmigen Fahrschienen 6 rollen die Laufrollen 11 der Fahrwerke 7 ab. Der Durchmesser der Laufrollen 11 ist so gewählt, daß bei auf dem unteren Steg der Fahrschiene 6 ruhenden Laufrollen 11 ein geringer Abstand zu dem oberen Steg der Fahrschiene 6 verbleibt. Hierdurch ist einerseits möglich, daß die Laufrollen 11 klemmungsfrei in der Fahrschiene 6 verfahren können und andererseits das durch die seitliche Verlagerung des Behälters 2 während des Kippvorgangs das auf das Fahrwerk 7 aufgebrachte Kippmoment von diesen aufgenommen werden kann, indem die dem auskragenden Teil des Kipparms 8 abgewandte Laufrolle 11 von dem unteren Steg der Fahrschiene 6 abhebt und sich unmittelbar anschließend an den oberen Steg der Fahrschiene 6 anlegt. Hierdurch werden die aus dem Kippmoment resultierenden Kräfte sicher in die Fahrschiene 6 und den Tragrahmen eingeleitet. Die nebeneinanderliegenden Laufrollen 11 des Fahrwerks 7 sind jeweils an koaxial zueinander angeordneten Abschnitten einer Laufachse 23 gelagert, die zwischen den Laufrollen 11 mit dem Rahmen 10 des Fahrwerks 7 verbunden ist. Der Rahmen 10 ist mittels sich in Richtung des Tragrahmen 22 sowie - in bezug auf das obere Fahrwerk 7 gesehen - nach unten erstreckende Mitnehmerelemente mit Bolzen 24 dem Zugmittel 4 verbunden. Für den Fall, daß das Zugmittel 4 als Zahnkette ausgebildet ist, handelt es sich bei dem Bolzen 24 um die jeweils seitlich verlängerten Bolzen für die Kettenlaschen.

Der Kipparm 8 besteht im wesentlichen aus einem sich quer zur Förderrichtung F erstreckenden Profil, das in der Mitte seiner Längserstreckung an einer in Förderrichtung F verlaufenden Achse 9 und somit auf dem Rahmen 10 des Fahrwerks 7 gelagert ist. An den Enden des Kipparms 8 und in Verlängerung desselben sind jeweils die Haltemittel 20 angeordnet. Die als Permanentmagnete ausgebildeten Haltemittel 20 sind über begrenzt flexible Verbindungselemente 21, insbesondere Blechstreifen, mit dem Kipparm 8 verbunden. Durch die flexible Befestigung ist es möglich, daß die Oberfläche des Haltemittels 20 sich vollflächig an die Unterseite des Bodens 19 des Behälters 2 anlegen kann. Hierdurch wird die Haltekraft des Haltemittels 20 optimiert. Es ist auch möglich die Magnete in einem topfförmigen Kunststoffelement zu lagern und dieses fest mit dem Kipparm 8 oder die Haltemittel 20 direkt mit dem Kipparm 8 zu verbinden.

Desweiteren ist der Figur 2 die Anordnung der Führungsschienen 15a, 15b und der Kippschienen 16a, 16b zu entnehmen. Es ist ersichtlich, daß in Förderrichtung F gesehen im Bereich des Obertrums des Zugmittels 4 jeweils unterhalb der Fahrschienen 6 jeweils ein Paar Führungsschienen 15a, 15b mit Kippschienen 16a, 16b vorgesehen ist. Im Bereich des Untertrums des Zugmittels 4 ist je Seite der Kippvorrichtung 11 nur eine Führungsschiene 15a, 15b und keine Kippschiene 16a, 16b angeordnet. In der Figur 2 ist ein Fahrwerk 7 mit einem Kipparm 8 dargestellt, dessen Koppelstange 12 über seine Führungsrolle 14 in die in Förderrichtung F gesehen auf der rechten Seite angeordneten Führungsschiene 15a und bei Bedarf in dessen zugeordnete Kippschiene 16a eingreift. Das in Förderrichtung F folgende Fahrwerk 7 mit dem Kipparm 8 ist spiegelbildlich zu dem in Figur 2 dargestellten Fahrwerk 7 angeordnet, wobei beide Kipparme 8 ein Paar bilden, um einen Behälter zu tragen, so daß die Koppelstange 12 an der linken Seite des als Doppelarm ausgebildeten Kipparms 8 über seine Achse 13 angelenkt ist. Dieses andere Fahrwerk 7 des Paares ist in verschwenkter Kippstellung in der Figur 3 dargestellt.

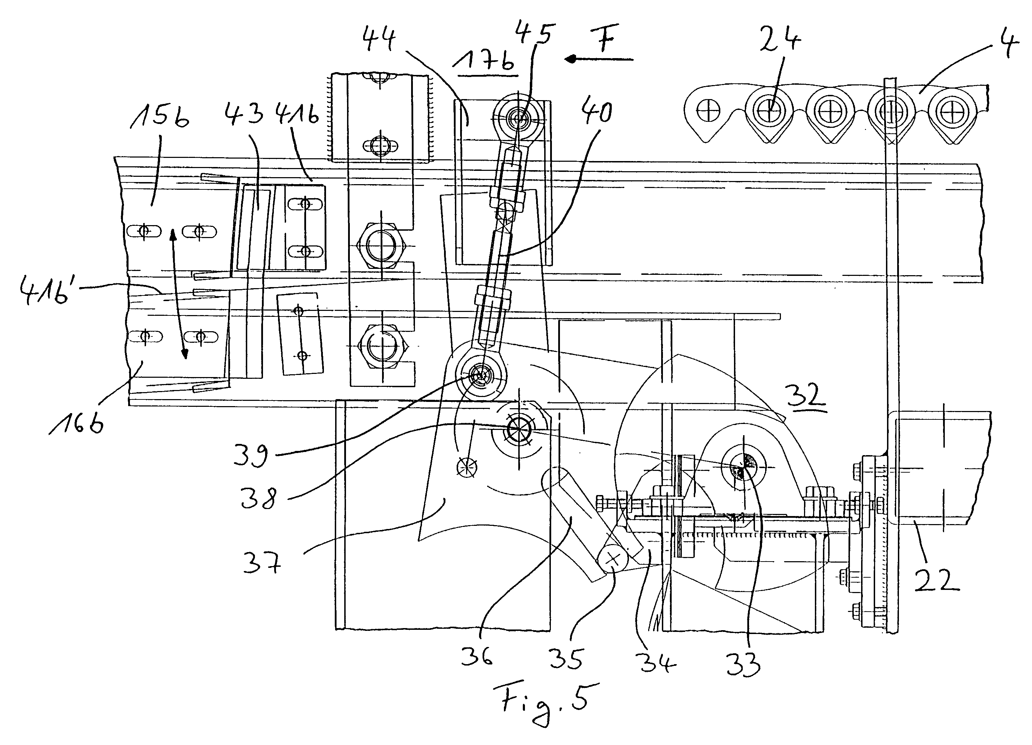

Für die gemeinsame Schwenkbewegung der beiden Kipparme 8, die jeweils gemeinsam einen Behälter 2 tragen, ist der in Förderrichtung F vordere Kipparm 8 dadurch schwenkbar, daß die Führungsrolle 14 aus der unteren bzw. inneren Führungsschiene 15 auf der rechten Seite über ein Weichenelement 17a (siehe Figuren 4 und 5) in die zwischen der Führungsschiene 15a und der Fahrschiene 6 angeordnete Kippschiene 16a umgelenkt wird. Hierdurch wird die Koppelstange 12 in Vertikalrichtung nach oben bewegt und der Kipparm 8 um etwa 45° um die Achse 9 nach links verschwenkt.

Da im Bereich des Untertrums des Zugmittels 4 keine Verschwenkung der Kipparme 8 erforderlich ist, ist nur eine Führungsschiene 15a auf der rechten Seite und eine Führungsschiene 15 auf der linken Seite nach oben versetzt angeordnet.

Im Vergleich mit der Figur 3, die eine Ausschnittsvergrößerung von Figur 2 aus dem Bereich des Kippantriebes jedoch für das in Förderrichtung F gesehen hintere Fahrwerk 7 mit einem Kipparm 8 des Paares von Kipparmen 8 zeigt, ist ersichtlich, daß die auf der in Förderrichtung F gesehen linken Seite angeordnete Führungsschiene 15b und Kippschiene 16b gegenüber der rechten Seite miteinander vertauscht sind. Die Kippschiene 16b befindet sich somit unterhalb der Führungsschiene 15b. Diese Anordnung ist auch der Figur 2 zu entnehmen, wo im Bereich des Untertrums des Zugmittels 4 zu sehen ist, daß die Führungsschiene 15b auf der linken Seiten im Nachbarbereich und nahezu angrenzend an die Fahrschiene 6 angeordnet ist und die Führungsschiene 15 auf der rechten Seite in Vertikalrichtung um etwa die Höhe einer Kippschiene 16 zuzüglich eines Spaltes von der Oberseite der unteren Fahrschiene 6 nach oben versetzt ist.

Ferner ist der Figur 3 zu entnehmen, daß auf der Seite des als Doppelarm ausgebildeten Kipparms 8, die der Koppelstange 12 abgewandt ist, eine Zugstange 25 um eine in Förderrichtung F verlaufende Achse 26 schwenkbar gelagert ist. Die Zugstange 25 ist in allen Stellungen des Kipparms 8 im wesentlichen vertikal ausgerichtet und stützt sich an dem dem Kipparm 8 abgewandten Ende über ein Federelement 27 an dem Rahmen 10 des Fahrwerkes 7 ab. Dieses Federelement 27 hat die Aufgabe den Kipparm 8 gegenüber dem Rahmen 10 des Fahrwerkes 7 vorzuspannen, so daß einerseits in der horizontalen Transportstellung und auch in der schrägen Kippstellung die Führungsrolle 14 jeweils an dem oberen Flansch der u-förmig ausgebildeten und seitlich offenen Führungsschiene 15a, 15b oder Kippschiene 16a, 16b abläuft. Hierdurch wird der Kipparm 8 während des gesamten Kippvorganges und auch bei der Rückführung im Bereich des Untertrums des Zugmittels 4 stabilisiert.

Ferner zeigt die Figur 3, daß die Führungsrolle 14 über einen Schlepparm 28 mit dem dem Kipparm 8 abgewandten Ende der Koppelstange 12 über eine Achse 29 verbunden ist. Dieser Schlepparm 28 ist ebenfalls in Seitenansicht der Figur 4 zu entnehmen. Die Achse 29 ist quer zur Förderrichtung F und horizontal ausgerichtet.

Bezüglich der Lagerung der Koppelstange 12 an dem Schlepparm 28 ist den Figuren 3 und 4 zu entnehmen, daß diese über eine quer zur Förderrichtung F ausgerichtete Achse 30 erfolgt. Die Achsen 13 und 30 sind jeweils Bestandteile von Kugelgelenken, um die auftretenden Versetzungen während der raumförmigen Bewegung des Kipparms 8 während des Kippvorgangs auszugleichen. Durch die Verbindung der Führungsrolle 14 über den Schlepparm 28 mit dem Rahmen 10 und das Angreifen der Koppekstange 12 an dem Schlepparm 28 oberhalb der Lagerung der Führungsrolle 14 wird erreicht, daß auf eine zusätzliche Führung der Koppelstange 12 in Vertikalrichtung verzichtet werden kann. Durch die Anlenkung des Schlepparms 28 in Förderrichtung F gesehen vorne an dem Rahmen 10 wird die Führungsrolle 14 und der Schlepparm 28 hinter dem Fahrwerk 7 hergezogen. Diese Art Bewegung der Führungsrolle 14 in der Führungsschiene 15 und der Kippschiene 16 erhöht die Stabilität der Gelenkverbindung des Schlepparms 28 und der Koppelstange 12 untereinander.

Außerdem ist durch einen Vergleich der Figuren 2 und 3 ersichtlich, daß an einer Hebelseite des Kipparms 8 zusätzlich ein Verbindungsblech 31 angeordnet ist, über das entweder die Zugstange 25 oder die Koppelstange 12 mit dem Kipparm 8 verbunden ist, je nachdem, ob es sich jeweils um den vorderen oder hinteren Kipparm 8 des Paares von Kipparmen 8 für den Transport eines Behälters 2 handelt. Hierdurch wird erreicht, daß obwohl auf den beiden gegenüberliegenden Seiten die Führungsschiene 15a, 15b und die Kippschiene 16a, 16b in Vertikalrichtung gegeneinander vertauscht und somit vertikal versetzt sind, identisch ausgebildete Koppelstangen 12 verwendet werden können.

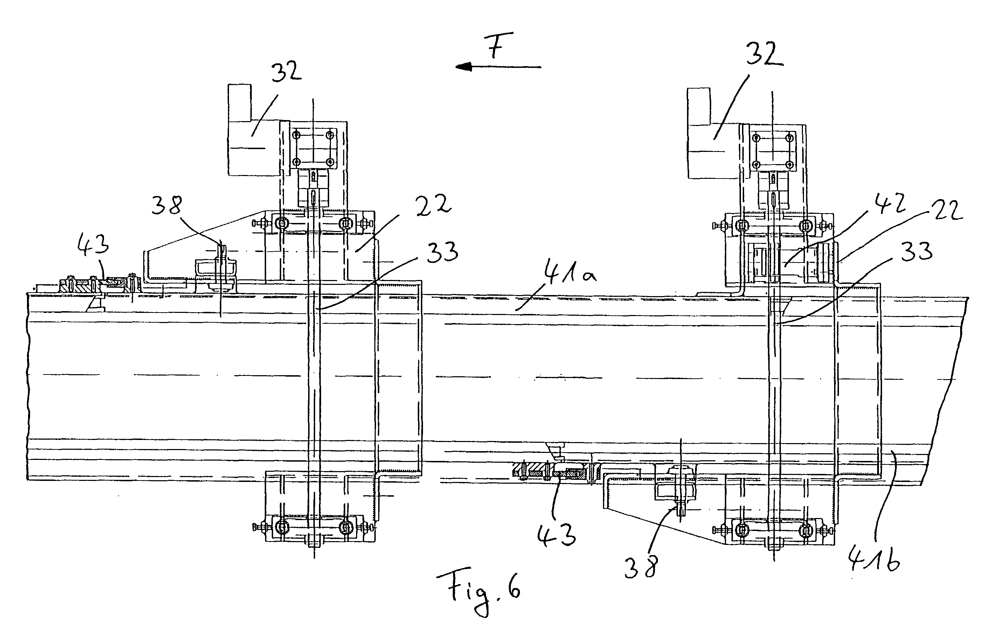

Die Figur 4 zeigt eine Auschnittsvergrößerung von Figur 1 aus dem Bereich der beiden in Förderrichtung F aufeinanderfolgenden Weichenelemente 17a und 17b, die im wesentlichen aus einem Antrieb 32 (siehe Figur 6) und einem ebenen Kurvengetriebe mit Dreh- und Schubgelenken nach Art eines Malteserkreuzes besteht. Der Antrieb 32 besteht aus einem Elektromotor mit einem vorgeschalteten Getriebe. Der Antrieb 32 ist an dem Tragrahmen 22 der Kippvorrichtung 1 gelagert und abtriebsseitig über eine quer und horizontal zur Förderrichtung F ausgerichtete Welle 33 mit einer hierauf gelagerten Stiftscheibe 34 verbunden. Die Stiftscheibe 34 hat die Funktion eines an der Welle 33 einseitig gelagerten Hebelarms, dessen der Welle 33 abgewandtes Ende mit einem Stift 35 versehen ist, der koaxial zur Welle 33 ausgerichtet ist. Vorzugsweise ist der Stift 35 mit einer Rolle versehen. Der Stift 35 greift in einen einseitig offenen und langlochförmigen Schlitz 36 einer Schlitzscheibe 37 ein, die um eine koaxial zur Welle 33 der Stiftscheibe 34 ausgerichtete weitere Welle 38 drehbar gelagert ist. Die Schlitzscheibe 37 ist in erster Näherung quadratisch ausgebildet, exzentrisch an der Welle 38 gelagert und weist zwei konkave Anlageflächen 37' auf zur Selbsthemmung des Kurvengetriebes in seinen Endstellungen. Funktionsmäßig ist die Schlitzscheibe 37 als Doppelhebel ausgebildet, wobei an dem einem Hebelarm der Schlitz 36 angeordnet ist, dessen gedachte Verlängerung seiner Längserstreckung die Welle 38 zentrisch schneidet. An dem gegenüberliegenden Hebelarm der Schlitzscheibe 37 und somit auf der dem Schlitz 36 gegenüberliegenden Seite ist über eine koaxial zur Welle 38 ausgerichtete Achse 39 eine Verbindungsstange 40 gelagert, dessen der Achse 39 abgewandtes Ende über eine weitere parallel zur Achse 35 ausgerichtete Achse 45 an einer Weichenschiene 41 befestigt ist. Die Stift-Schlitz Verbindung dient zur Verschwenkung der Weichenschiene 42; die Festlegung der Weichenschiene 42 in den Endstellungen erfolgt über die Anlageflächen 34', 37'.

Diese Weichenschiene 41 weist eine sich in Förderrichtung F erstreckende Länge auf, die etwa im Bereich der Länge eines Behälters 2 liegt, und ist über ein Weichengelenk 42 aus ihrer Ruhestellung, in der diese im Verlauf der Führungsschiene 15b angeordnet ist, in seine Betriebsstellung verschwenkbar. In der Betriebsstellung verbindet die Weichenschiene 41b die Führungsschiene 15b mit der Kippschiene 16b und ist in Förderrichtung F gesehen mit Gefälle angeordnet. Das Weichengelenk 42 für die Weichenschiene 41 b ist in Figur 4 nicht dargestellt, da dieses durch die Länge der Weichenschiene 41b, wodurch eine sanfte Kippbewegung der Behälter 2 erreicht wird, außerhalb des rechten Randes der Zeichnung liegt. Das Weichengelenk 42 für die Weichenschiene 41 a ist jedoch in der Draufsicht von Figur 4 in Figur 6 zu entnehmen. Die Weichenschiene 41 ist in dem Ausführungsbeispiel zweiteilig ausgebildet, um deren Länge zu verringern. Ein erster Teil ist mit dem Weichengelenk 42 verbunden und ein zweiter Teil 41a stationär an dem Anfang der Kippschiene 16b befestigt. Der zweite Teil 41b ist entsprechend der Ausrichtung des ersten Teils in der Betriebsstellung winklig zur Kippschiene 16 ausgerichtet.

In der Figur 4 ist die Weichenschiene 41b in ihrer horizontal verlaufenden Ruhestellung dargestellt; die Betriebsstellung der Weichenschiene 41b ist nur durch das eingezeichnete feststehende Ende 41 b' angedeutet. Desweiteren ist der Figur 4 zu entnehmen, daß die Weichenschiene 41b neben dem Weichengelenk 42 auch an seinem dem Weichengelenk 42 abgewandten und somit in Förderichtung F vorderen Ende zusätzlich in Vertikalrichtung über Führungselemente 43 gehalten sind. Die Führungselemente 43 bestehen aus einem u-förmigen Teil, das an dem Tragrahmen 22 befestigt ist und dessen offene Seite in Förderrichtung F gesehen nach vorne gerichtet ist. In die Öffnung greift ein streifenförmiges Element ein, das an der Weichenschiene 41 befestigt ist. Die Verbindungsstange 40 greift an der Weichenschiene 41 b in der Nähe der Führungselemente 43 und mit Abstand von dem Weichengelenk 42 an.

Desweiteren ist der Figur 4 die entsprechende Ausbildung der Weichenschiene 41a des Weichenelementes 17a zu entnehmen. Auch hier ist die Weichenschiene 41a in seiner Ruhestellung dargestellt und die Betriebsstellung nur andeutungsweise durch das in Förderrichtung F liegende vordere Ende des feststehenden Teils der Weichenschiene 41a' angedeutet. Der Schlitz 36 der Schlitzscheibe 37 des Weichenelements 17a ist hier in seinen beiden möglichen Stellungen gezeigt.

Anhand der Figur 5, die eine Ausschnittsvergrößerung von Figur 4 aus dem Bereich des Weichenelements 17b zeigt, werden nachfolgend die Funktionsweise und die Vorteile des Antriebes 32 der Weichelemente 17 näher erläutert. Die Weichenschiene 41b befindet sich in ihrer angehobenen und horizontalen Ruhestellung, so daß die Führungsrolle 14 der Koppelstangen 12 der Fahrwerke 7 entlang der Führungschiene 15b geführt werden und somit der Kipparm 18 sich in seiner Transportstellung befindet. In dieser Ruhestellung wird die Weichenschiene 41 b über die Verbindungsstange 40 gehalten, die hierzu über einen Verbindungswinkel 44 und die Achse 45 mit der Weichenschiene 41b gelenkig verbunden ist und sich an einem Ende an der Schlitzscheibe 37 abstützt, die in ihrer Ruhestellung über aneinander liegenden Anlageflächen 34', 37' der Schlitzscheibe 37 und der Stiftscheibe 34 gehalten wird. Da der Schlitz 36 in der Betriebsstellung und auch der Ruhestellung der Weichenschiene 41 b mit seiner Längserstreckung tangential zur Welle 33 ausgerichtet ist, werden nur über die Anlageflächen 34', 37' Kräfte in Richtung der Welle 33 in die Stiftscheibe 34 eingeleitet und somit der Antrieb 32 nicht drehend beansprucht. Dieses Kurvengetriebe wird somit als selbsthemmend bezeichnet.

Die Hebelverhältnisse an der Schlitzscheibe 37 sind in Anpassung mit dem Verstellweg der Weichenschiene 41b so gewählt, daß auch in der Betriebsstellung der Stiftscheibe 34 und der Schlitzscheibe 37 (siehe Figur 4, Weichenelemente 17a) der Schlitz 36 mit seiner Längserstreckung tangential zur Welle 33 ausgerichtet ist und die Anlageflächen 34', 37' aneinander liegen. Durch Verdrehung der Stiftscheibe 34 um 90° ist somit die Weichenschiene 41 aus ihrer Betriebs- in ihre Ruhestellung bzw. umgekehrt verschwenkbar. Die Getriebeverbindung der Weichenschiene 41 über die Stiftscheibe 34 und die Schlitzscheibe 37 hat darüberhinaus noch den Vorteil, daß insbesondere bei als Elektromotor ausgebildeten Antrieb 32 ein geringes Anlaufmoment benötigt wird, da der Stift 35 zu Beginn seiner Bewegung zunächst relativ frei in Richtung der Längserstreckung des Schlitzes 36 bewegt wird und erst mit zunehmender Verschwenkung der Stiftscheibe 34 der Anteil der auf die Seitenwände des Schlitzes 36 zu übertragenden Kräfte ansteigt.

Desweiteren zeigt Figur 5, daß die Verbindungsstange 40 in ihrer Länge verstellbar ist. Hierdurch kann der Übergang zwischen dem Ende der Weichenschiene 41 und dem Anfang der Führungsschiene 15 oder der Kippschiene 16 leicht eingestellt werden.

Desweiteren ist der Figur 6, die eine Draufsicht auf Figur 4 zeigt, zu entnehmen, daß das Weichengelenk 42 als Schaniergelenk ausgebildet ist. Dieses Schaniergelenk weist eine horizontal und quer zur Förderrichtung F ausgerichtete Schwenkachse auf und besteht im wesentlichen aus einem an den Tragrahmen 22 armförmigen Lagerelement, das an seinem dem Tragrahmen 22 abgewandten Ende eine Bohrung für eine Achse aufweist, auf die an dem aus dem Befestigungselement herausragenden Enden ein gabelförmiges Gelenkteil aufgeschoben ist, das über einen Winkel mit der Weichenschiene 41 a verbunden ist.

## Patentansprüche

1. Verteilförderer zum Übergeben von Stückgut, insbesondere von Fluggepäckstücken, von einer Förderbahn (3) an mindestens einen angrenzenden Abzweigförderer, mit in Förderrichtung (F) hintereinander angeordneten und entlang einer Fahrschiene (6) bewegbaren Fahrwerken (7), die über ein angetriebenes Zugmittel (4) zu einer endlos umlaufenden Kette verbunden sind, mit auf den Fahrwerken (7) angeordneten Kipparmen (8), die zum Übergeben des Stückguts jeweils um eine in Förderrichtung (F) und weitestgehend horizontal verlaufende Achse (9) seitlich verschwenkbar sind, wobei für die Kippbewegung der Kipparme (8) an jedem Kipparm (8) außerhalb seiner Achse (9) gelenkig eine Koppelstange (12) angreift, die im wesentlichen vertikal ausgerichtet ist und an ihrem dem Kipparm (8) abgewandten Ende eine Führungsrolle (14) gelagert ist, die für ein Halten der Kipparme (8) in ihrer horizontalen Transportstellung in einer parallel zur Fahrschiene (6) verlaufenden Führungsschiene (15) geführt ist und für ein Verschwenken der Kipparme (8) um die Achse (9) über ein schaltbares Weichenelement (17) die Führungsrolle (14) in eine vertikal zur Führungsschiene (15) versetzt angeordnete Kippschiene (16) umleitbar ist, die Weichenelemente (17) aus einer Weichenschiene (41) bestehen, die in ihrer horizontalen Ruhestellung im Verlauf der Führungsschiene (15) angeordnet ist und über einen Antrieb (32) in eine verschwenkte und die Führungsschiene (15) mit der zugeordneten Kippschiene (16) verbindende Betriebsstellung verschwenkbar ist,
**dadurch gekennzeichnet,**
**daß** die Weichenschiene (41) über ein Kurvengetriebe nach Art eines Malteserkreuzes verschwenkbar ist, das eine quer zur Förderrichtung (F) ausgerichtete, antreibbare Stiftscheibe (34) aufweist, die über einen Stift (35) in einen in einer Schlitzscheibe (37) angeordneten Schlitz (36) eingreift, wobei an der Schlitzscheibe (37) eine Verbindungsstange (40) gelagert ist, die die Drehbewegung der Schlitzscheibe (37) in eine Hub- oder Senkbewegung der Weichenschiene (41) umsetzt.

2. Verteilförderer nach Anspruch 1,
**dadurch gekennzeichnet,**
**daß** das Stückgut als Behälter (2) ausgebildet ist, in dem Fördergut, insbesondere Fluggepäckstücke, transportierbar ist und mindestens zwei Kipparme (8) zur Weiterleitung der Behälter (2) zwischen den Förderbahnen (3) lösbar über Haltemittel (20) mit dem Behälter (2) verbindbar sind.

3. Verteilförderer Anspruch 2,
**dadurch gekennzeichnet,**
**daß** der Schlitz (36) mit seiner gedachten Verlängerung seiner Längserstreckung die Welle (38) der Schlitzscheibe (37) schneidet, die Stiftscheibe (34) für eine Verschwenkung der Weichenschiene (41) aus ihrer Ruhestellung in ihre Betriebsstellung um etwa 90° schwenkbar ist und jeweils in der Betriebs- und in der Ruhestellung der Schlitz (36) mit seiner Längserstreckung tangential zur Welle (33) der Stiftscheibe (34) ausgerichtet ist, sowie an der Stiftscheibe (34) und der Schlitzscheibe (37) angeordnete Anlageflächen (34', 37') zur Selbsthemmung des Kurvengetriebes aneinanderliegen.

4. Verteilförderer nach einem der Ansprüche 1 bis 3,
**dadurch gekennzeichnet,**
**daß** in Förderrichtung (F) gesehen auf der rechten und linken Seite der Kippvorrichtung (1) jeweils eine Führungsschiene (15), eine Kippschiene (16) und ein Weichenelement (17) vorgesehen sind und die Koppelstangen (12) jeweils abwechselnd an den beiden Seiten der Kipparme (8) angreifen, so daß die Führungsrollen (14) der aufeinanderfolgenden Fahrwerke (7) jeweils abwechselnd in die rechten und linken Führungsschienen (15) und Kippschienen (16) eingreifen.

5. Verteilförderer nach einem der Ansprüche 1 bis 4,
**dadurch gekennzeichnet,**
**daß** die Behälter (2) über an den Kipparmen (8) angeordnete Haltemittel (20) zur Aufnahme von und Übergabe an die Förderbahn koppel- und entkoppelbar sind, sowie die Behälter (2) im gekoppelten Zustand auf den bewegbaren Kipparmen (8) ruhen.

6. Verteilförderer nach einem der Ansprüche 1 bis 5,
**dadurch gekennzeichnet,**
**daß** die Fahrwerke (7) Laufrollen (11) aufweisen, die auf quer zur Förderrichtung (F) gesehen stadionförmig verlaufenden Fahrschienen (6) ablaufen, und das Zugmittel (4) über zwei im Bereich der Enden der Fahrschienen (6) angeordnete Umlenkräder (5) geführt ist.

7. Verteilförderer nach einem der Ansprüche 1 bis 6,
**dadurch gekennzeichnet,**
**daß** auf jedem Fahrwerk (7) ausschließlich ein Kipparm (8) angeordnet ist und der Abstand zwischen zwei Kipparmen (8) in Förderrichtung (F) gesehen so auf die Länge der Behälter (2) abgestimmt ist, daß ein Behälter (2) von zwei Kipparmen (8) tragbar ist.

8. Verteilförderer nach einem der Ansprüche 1 bis 7,
**dadurch gekennzeichnet,**
**daß** die Haltemittel (20) als Permanentmagnete ausgebildet sind und der Behälter (2) zumindest im Bereich seiner Aufstandsfläche magnetisch ausgebildet ist.

9. Verteilförderer nach Anspruch 8,
**dadurch gekennzeichnet,**
**daß** die Haltemittel (20) scheibenförmig ausgebildet, mit einer Scheibenfläche dem anzukoppelnden Behälter (2) zugewandt und begrenzt winkelbeweglich an dem Kipparm (8) gelagert sind.

10. Verteilförderer nach einem der Ansprüche 1 bis 9,
**dadurch gekennzeichnet,**
**daß** die Haltemittel (20) an den seitlichen Enden der Kipparme (8) angeordnet sind.

## Claims

1. Separating conveyor for the transfer of unit loads, in particular flight baggage items, from a conveyor track (3) to at least one adjacent branching conveyor, having carriages (7) arranged one after the other in the conveying direction (F) and able to move along a rail (6), these being connected via pulling means (4) to an endless circulating chain, with tilt arms (8) arranged on the carriages (7) which, to transfer the unit load, can each be swivelled laterally about an axis (9) extending in the conveying direction (F) and largely horizontally, such that for the tilting motion of the tilt arms (8) a coupling rod (12) engages flexibly with each tilt arm (8) away from its axis (9), the said rod being directed essentially vertically with a guide roll (14) fitted on its end facing away from the tilt arm (8), which, to maintain the tilt arm (8) in its horizontal transport position, is guided in a guide rail (15) extending parallel to the rail (6), and to swivel the tilt arm (8) about the axis (9), the guide roll (14) can be diverted via a switchable point element (17) into a tilt rail (16) arranged a vertical distance away relative to the guide rail (15), the switch-point elements (17) consisting of a switch-point rail (41) arranged in its horizontal rest position along the path of the guide rail (15) and able to be swivelled by a drive mechanism (32) into a swivelled operating position which connects the guide rail (15) with the associated tilt rail (16),
**characterised in that**
the switch-point rail (41) can be swivelled by virtue of a cam gear resembling a Maltese cross, which comprises a drivable studded disc (34) directed transversely to the conveying direction (4), which engages with a stud (35) in a slot (36) arranged in a slotted disc (37), a connecting rod (40) being mounted on the slotted disc (37) which converts the rotary movement of the slotted disc (37) into a lifting or lowering movement of the switch-point rail (41).

2. Conveyor according to Claim 1,
**characterised in that**
the unit load consists of a container (2) in which items to be conveyed, in particular flight baggage items, can be transported and at least two tilt arms (8) can be detachably connected to the container (2) via holding means (20) for passing the container (2) onwards between the conveyor tracks (3).

3. Conveyor according to Claim 2,
**characterised in that**
the imaginary extension of the length of the slot (36) intersects the shaft (38) of the slotted disc (37), and to swivel the switch-point rail (41) the studded disc (34) can be swivelled through about 90° from its rest position to its operating position, and in both the operating and the rest position the slot (36) is directed with its length tangential to the shaft (33) of the studded disc (34), and contact surfaces (34' 37' positioned on the studded disc (34) and the slotted disc (37) come in contact with one another to self-lock the cam gear.

4. Conveyor according to any of Claims 1 to 3,
**characterised in that**
on the right and left side of the tilting mechanism (1) viewed in the conveying direction (F), in each case a guide rail (15), a tilt rail (16) and a switch-point element (17) are provided, and the coupling rods (12) engage respectively in alternation with the tilt arms (8) on both sides, so that the guide rolls (14) of the successive carriages (7) engage alternately in the right and left guide rails (15) and tilt rails (16).

5. Conveyor according to any of Claims 1 to 4,
**characterised in that**
the containers (2) can be coupled and uncoupled via holding means (20) arranged on the tilt arms (8) to take them from and deliver them to the conveyor track, and the containers (2) in the coupled condition rest on the movable tilt arms (8).

6. Conveyor according to any of Claims 1 to 5,
**characterised in that**
the carriages (7) have rollers (11) that run on rails (6) which follow a path in the shape of an athletics stadium when viewed transversely to the conveying direction (F), and the drawing means (4) are guided over two guide wheels (5) arranged in the area of the ends of the rails (6).

7. Conveyor according to any of Claims 1 to 6,
**characterised in that**
only one tilt arm (8) is arranged on each carriage (7) and the distance between two tilt arms (8) viewed in the conveying direction (F) is matched to the length of the containers (2) such that a container (2) can be carried by two tilt arms (8).

8. Conveyor according to any of Claims 1 to 7,
**characterised in that**
the holding means (20) are formed as permanent magnets and the container (2) is formed of a magnetic material at least in the area of the surface on which it stands.

9. Conveyor according to Claim 8,
**characterised in that**
the holding means (20) are formed as discs with one disc surface facing the container (2) to be coupled thereto, and are mounted on the tilt arm (8) with limited angular movement.

10. Conveyor according to any of Claims 1 to 9,
**characterised in that**
the holding means (20) are arranged on the lateral ends of the tilt arms (8).

## Revendications

1. Transporteur distributeur pour transférer des produits, en particulier des bagages aériens, d'une voie de transport (3) à au moins un transporteur de dérivation adjacent, comportant des chariots (7) agencés l'un derrière l'autre dans la direction de transport (F) et pouvant être déplacés le long d'un rail de roulement (6), chariots qui sont reliés, par l'intermédiaire d'un moyen de traction entraîné (4), en une chaîne tournant sans fin, des bras basculants (8) agencés sur les chariots (7), qui, pour transférer les produits, peuvent à chaque fois pivoter latéralement autour d'un axe (9) s'étendant dans la direction de transport (F) et sensiblement horizontalement, une bielle (12) s'engageant de façon articulée, pour le basculement des bras basculants (8), sur chaque bras basculant (8) à l'extérieur de son axe (9), bielle qui est orientée généralement verticalement et, à son extrémité opposée au bras basculant (8), il est monté un galet de guidage (14) qui, pour maintenir les bras basculants (8) dans leur position de transport horizontale, est guidé dans un rail de guidage (15) s'étendant parallèlement au rail de roulement (6) et, pour un pivotement des bras basculants (8) autour de l'axe (9), par l'intermédiaire d'un élément d'aiguillage commutable (17), le galet de guidage (14) peut être détourné dans un rail basculant (16) agencé de façon décalée verticalement par rapport au rail de guidage (15), les éléments d'aiguillage (17) étant constitués d'un rail d'aiguillage (41) qui est agencé, dans sa position horizontale de repos, dans le prolongement du rail de guidage (15) et peut être pivoté, par l'intermédiaire d'un entraînement (32), dans une position de service pivotée et reliant le rail de guidage (15) au rail basculant associé (16), **caractérisé en ce que** le rail d'aiguillage (41) peut pivoter, par l'intermédiaire d'une commande à cames, à la manière d'une croix de Malte, qui présente un disque à broche (34) pouvant être entraîné, orienté transversalement à la direction de transport (F) qui, par l'intermédiaire d'une broche (35), s'engage dans une fente (36) prévue dans un disque à fente (37), une tige de liaison (40) étant montée sur le disque à fente (37), laquelle transforme le mouvement rotatif du disque à fente (37) en un mouvement de levage ou d'abaissement du rail d'aiguillage (41).

2. Transporteur distributeur selon la revendication 1,
**caractérisé en ce que** les produits sont réalisés comme récipients (2), dans lesquels la matière transportée, en particulier des bagages aériens, peut être transportée et au moins deux bras basculants (8) pour guider les récipients (2) entre les voies de transport (3) peuvent être reliés de facon amovible, par l'intermädiaire de moyens de maintien (20), aux récipients (2).

3. Transporteur distributeur selon la revendication 2, **caractérisé en ce que** la fente (36), par son prolongement imaginaire de son extension longitudinale, coupe l'arbre (38) du disque à fente (37), le disque à broche (34), pour un pivotement du rail d'aiguillage (41), peut pivoter de sa position de repos dans sa position de service d'environ 90° et, à chaque fois, dans la position de service et dans la position de repos, la fente (36), par son extension longitudinale, est orientée tangentiellement à l'arbre (33) du disque à broche (34), et des surfaces d'appui (34', 37') agencées sur le disque à broche (34) et le disque à fente (37) sont adjacentes pour autobloquer la commande à cames.

4. Transporteur distributeur selon une des revendications 1 à 3, **caractérisé en ce que**, dans la direction de transport (F), sur le côté droit et le côté gauche du dispositif basculant (1), il est à chaque fois prévu unrail de guidage (1 5), un rail basculant (1 6) et un élément d'aiguillage (1 7), et les bielles (12) engagent, à chaque fois, de facon alternative, les deux côtés des bras basculants (8), de sorte que les galets de guidage (14) des chariots successifs (7) s'engagent, à chaque fois, de facon alternative, dans les rails basculants (1 6) et les rails de guidage (1 5) droits et gauches.

5. Transporteur distributeur selon une des revendications 1 à 4,
**caractérisé en ce que** les récipients (2) peuvent être couplés et découplés
par l'intermédiaire de moyens de maintien (20) agencés sur les bras basculants (8) pour la réception de et le transfert à la voie de transport, et les récipients (2) reposent, dans l'état couplé, sur les bras basculants mobiles (8).

6. Transporteur distributeur selon une des revendications 1 à 5,
**caractérisé en ce que** les chariots (7) présentent des rouleaux de roulement (1 1) qui roulent sur des rails de roulement (6) s'étendant transversalement à la direction de transport (F) en forme de stade, et le moyen de traction (4) est guidé par l'intermédiaire de deux roues de renvoi (5) agencées dans la zone des extrémités des rails de roulement (6).

7. Transporteur distributeur selon une des revendications 1 à 6,
**caractérisé en ce que**, sur chaque chariot (7), exclusivement un bras basculant (8) est agencé et la distance entre deux bras basculants (8) dans la direction de transport (F) est accordée à la longueur des récipients (2), de sorte qu'un récipient (2) peut être porté par deux bras basculants (8).

8. Transporteur distributeur selon une des revendications 1 à 7,
**caractérisé en ce que** les moyens de maintien (20) sont réalisés comme aimants permanents et les récipients (2) sont réalisés, au moins dans la zone de leur surface de contact, de facon magnétique.

9. Transporteur distributeur selon la revendication 8,
**caractérisé en ce que** les moyens de maintien, réalisés en forme de disque, sont montés, par une surface de disque, sur le bras basculant (8) en étant angulairement mobile de facon limitée et en regard du récipient (2) à coupler.

10. Transporteur distributeur selon une des revendications 1 à 9,
**caractérisé en ce que** les moyens de maintien (20) sont agencés aux extrémités latérales des bras basculants (8).
